(19) **Europäisches Patentamt European Patent Office Office européen des brevets**

(11) **EP 1 474 652 B1**

(12) **FASCICULE DE BREVET EUROPEEN**

(45) Date de publication et mention
de la délivrance du brevet:
**18.04.2007 Bulletin 2007/16**

(51) Int Cl.:
***G01B 11/00*** *(2006.01)* ***G01N 21/53*** *(2006.01)*

(21) Numéro de dépôt: **03718873.7**

(22) Date de dépôt: **14.02.2003**

(86) Numéro de dépôt international:
**PCT/FR2003/000478**

(87) Numéro de publication internationale:
**WO 2003/069275 (21.08.2003 Gazette 2003/34)**

(54) **PROCEDE DE DETERMINATION DE LA DISTANCE DE VISIBILITE ET PROCEDE DE DETERMINATION DE LA PRESENCE D'UN BROUILLARD**

VERFAHREN ZUR SICHTWEITEBESTIMMUNG UND NEBELDETEKTION

METHOD FOR DETERMINING THE RANGE OF VISIBILITY AND METHOD FOR DETECTING THE PRESENCE OF FOG

(84) Etats contractants désignés:
**AT BE BG CH CY CZ DE DK EE ES FI FR GB GR HU IE IT LI LU MC NL PT SE SI SK TR**

(30) Priorité: **14.02.2002 FR 0201822**

(43) Date de publication de la demande:
**10.11.2004 Bulletin 2004/46**

(73) Titulaires:
• **LABORATOIRE CENTRAL DES PONTS ET CHAUSSEES**
**75015 Paris (FR)**
• **INSTITUT NATIONAL DE RECHERCHE SUR LES TRANSPORTS ET LEUR SECURITE (INRETS)**
**94110 Arcueil (FR)**

(72) Inventeurs:
• **LAVENANT, Jean**
**F-22160 CALLAC (FR)**
• **TAREL, Jean-Philippe**
**F-75013 PARIS (FR)**
• **AUBERT, Didier**
**F-91540 MENNECY (FR)**

(74) Mandataire: **Dronne, Guy**
**Cabinet Beau de Loménie,**
**158, rue de l'Université**
**75340 Paris Cedex 07 (FR)**

(56) Documents cités:
**DE-U- 29 811 086** **US-A- 4 216 498**
**US-A- 5 987 152**

## Description

L'invention concerne un procédé de détermination de la distance de visibilité, en particulier à partir d'un véhicule dans une scène et un procédé de détermination de la présence d'un brouillard.

Le brouillard est une suspension dans l'air de très petites particules qui, dans un milieu aérien proche du sol, causent une diffusion de la lumière lorsque celle-ci passe à travers elles, ayant pour effet de réduire la visibilité de l'observateur. Dès lors que le taux d'humidité atteint 100%, l'air est humide et la vapeur d'eau commence à se condenser entraînant l'apparition du brouillard.

Par convention, on parle de brouillard lorsque le taux d'humidité atteint 100% et que la visibilité horizontale est inférieure à 1 Km. La réduction de la visibilité dépend de la structure du brouillard et en particulier de la concentration volumique des gouttelettes et de la distribution de leur taille qui peut varier de 2 $\mu$m à 10 $\mu$m. Ainsi, la pluie diverge notablement du brouillard, en ce que les particules impliquées diffèrent par leur taille qui peut atteindre jusqu'à $10^4$ $\mu$m et leur concentration.

En fait, le brouillard se compose généralement de petites gouttelettes d'eau sphériques au travers desquelles toutes les longueurs d'ondes du visible se diffusent de manière sensiblement égale, donnant un aspect gris au brouillard. Le brouillard a pour effet de diminuer le contraste d'une forme, ce qui perturbe le système visuel d'un observateur qui cherche à en évaluer la distance.

La densité du brouillard est habituellement caractérisée par la mesure conventionnelle de la distance de visibilité météorologique D définie comme la plus grande distance horizontale à laquelle un observateur peut détecter un grand objet noir à l'horizon en condition diurne. Cet objet ne peut être détecté du fond que si le contraste est suffisamment important et en tout cas au-dessus du seuil de perception. Le contraste perçu par l'observateur diminue avec la distance et avec l'opacité de l'atmosphère.

Le coefficient d'extinction du brouillard k, est une mesure des propriétés d'absorption et de dispersion de la lumière. D'après les normes de la Commission Internationale de l'Eclairage, la valeur seuil de contraste est de 5% (0,05). Pour un objet noir, la distance de visibilité météorologique D, appelée distance de visibilité pour toute la suite, est alors définie à partir de cette valeur seuil par la formule suivante :

$$D = -\frac{Ln(0,05)}{k} = \frac{3}{k}.$$

Ainsi, en estimant le coefficient d'extinction du brouillard k, il est possible de déterminer la portée visuelle.

Les statistiques de la sécurité routière montrent que malgré une amélioration considérable des infrastructures routières, le nombre des accidents de la route n'a pas suffisamment baissé, et en particulier en France, trop d'individus sont encore blessés gravement sur les routes, voire tués. En fait, l'attitude même du conducteur est souvent mise en cause au cours des constats d'accidents et en particulier la mauvaise perception de la route est une cause importante d'accidents. En France, par exemple, 1,2% des accidents corporels annuels sont dus à un manque de visibilité lié au brouillard et leur gravité est 1,8 fois plus importante que par temps clair.

La raison de la gravité de ces accidents est très souvent liée au fait que les vitesses pratiquées sont trop élevées par rapport à la distance de freinage qui permet de s'arrêter sans heurter un obstacle. Le fait de pourvoir assister le conducteur, en particulier dans des conditions de visibilité moindres, permettrait entre autres d'adapter la vitesse du véhicule à la situation rencontrée.

Des études d'accidentologies montrent que les accidents sont d'autant moins graves que le temps de réaction du conducteur est rapide et la vitesse du véhicule est faible. Sachant que le temps de réaction d'un conducteur se situe autour de 1 seconde en moyenne, on comprend l'intérêt de développer des systèmes automatisés d'aide à la conduite dont le temps de réaction est déjà à ce jour en dessous de 0,1 seconde qui agissent en fonction de la présence de brouillard et/ou de la distance de visibilité.

En conséquence, les systèmes d'assistance à la conduite ciblés sur le conducteur sont de plus en plus développés et pourraient devenir prochainement un équipement optionnel des véhicules.

De tels systèmes peuvent en particulier agir sur la vitesse du véhicule et/ou sur l'actionnement des feux de brouillard, etc....

On connaît de tels procédés de détermination du brouillard et de la distance de visibilité. Cependant, ces déterminations connues se font uniquement de manière statique, à partir de la comparaison entre une image de la scène prise sans brouillard et servant de référence et une image de la même scène en présence de brouillard.

Ces déterminations se font en utilisant une caméra fixe, de manière à pouvoir comparer la même scène et ne permettent donc pas d'indiquer de résultat en mouvement, en particulier à partir d'un véhicule. Ces méthodes ne sont donc pas adaptées à l'assistance d'un conducteur dont la scène est constamment en évolution et où l'image de référence ne peut exister.

Le premier but de l'invention est de fournir un procédé qui permette de déterminer la distance de visibilité en particulier à partir d'un véhicule qui est préférentiellement en déplacement, afin de pouvoir assister le conducteur, en agissant par exemple sur la vitesse du véhicule automatiquement

Le premier but de l'invention est atteint par le fait que le procédé comporte les étapes suivantes :

- on capture au moins une première image de la scène à partir du véhicule, préférentiellement dans le sens de déplacement dudit véhicule,
- on enregistre la luminance en chaque point de ladite première image,
- on applique un masque sur ladite première image pour obtenir une zone de ladite première image et on effectue une moyenne de cette luminance le long de l'abscisse de ladite zone pour obtenir une courbe de la luminance verticale en fonction de chaque ordonnée de ladite zone, et qui présente au moins un point d'inflexion,
- on détermine un coefficient d'extinction du brouillard à partir de ladite courbe de la luminance verticale, et
- on calcule la distance de visibilité à partir dudit coefficient d'extinction.

La luminance est directement liée au niveau de gris enregistré pour l'image à l'aide d'une caméra par exemple et représente le contraste perçu par un conducteur.

Dans le cas d'objets étendus présentant une luminance entre l'objet et le fond sur lequel il se détache, le coefficient d'extinction du brouillard k peut être calculé à partir de la loi de Koschmieder :

$$L = L_0 e^{-kd} + (1 - e^{-kd}) L_f ,$$

où

$$\begin{cases} L_0 \text{ représente la luminance d'un pixel au sol} \\ L_f \text{ représente la luminance d'un pixel dans le ciel supposé constant} \\ k \text{ représente le coefficient d'extinction du brouillard (en } m^{-1}) \\ d \text{ représente la distance entre un point observé et l'observateur (en } m) \end{cases}$$

Un calibrage radiométrique de la caméra permet de ramener les pixels à la même sensibilité, c'est à-dire qu'un objet uniforme est enregistré avec un même niveau de gris.

Cependant, malgré ce calibrage radiométrique l'image présente souvent des parasites, en particulier, sur les bords de l'image, qui perturbent l'analyse de cette dernière. L'application d'un masque sur l'image permet d'éliminer les informations parasites présentes et d'obtenir une image qui présente alors pour un même objet un niveau de gris sensiblement homogène. La géométrie du masque employé est préférentiellement adaptée à la scène enregistrée.

Ainsi, le fait d'établir une moyenne de la luminance le long de l'abscisse d'une zone choisie à partir de l'enregistrement effectué pour chaque point (ou pixel), permet d'éviter le bruit enregistré sur l'image et de construire une courbe de luminance selon une direction sensiblement verticale de l'image, courbe appelée pour toute la suite courbe de luminance verticale.

La connaissance de la luminance de chaque ordonnée de l'image permet ensuite de déterminer à partir de la connaissance du coefficient d'extinction k du brouillard, ia distance de visibilité météorologique D, directement à partir de la formule :

$$D = \frac{3}{k} .$$

Ce procédé, adapté aux mouvements de véhicules, est particulièrement intéressant lorsqu'il est utilisé en dynamique, c'est-à-dire notamment à partir d'un véhicule en mouvement, puisqu'il peut permettre d'assister un conducteur de véhicule à partir de l'enregistrement de la scène qui correspond à la vision qu'il a au travers du pare-brise de son véhicule. Le procédé permet de déterminer la distance de visibilité lorsque le véhicule est en mouvement, soit en déplacement à une vitesse V, ou à l'arrêt, soit à une vitesse nulle (V=0). L'image est alors préférentiellement prise vers l'avant du véhicule ou de son sens habituel de circulation pour rendre compte de la vision qu'a le conducteur au travers du pare-brise du véhicule.

En outre, ce procédé est adapté pour permettre d'indiquer la distance de visibilité de manière passive, c'est-à-dire sans intervention automatique sur le véhicule, ou de manière active en agissant automatiquement sur un organe du véhicule.

Utilisé de manière passive, le procédé peut par exemple à l'aide d'un affichage lumineux apparaissant dans l'habitacle du véhicule par exemple, indiquer au conducteur la valeur de la distance de visibilité ou la vitesse à ne pas dépasser. Un capteur de vitesse peut permettre d'indiquer au procédé la vitesse du véhicule, qui peut alors le cas échéant afficher au conducteur que cette dernière est trop élevée. Dans tous les cas, en passif, il appartient au conducteur d'adapter la vitesse de son véhicule lui-même et d'activer les feux de brouillard si nécessaire.

De manière active, le procédé peut par exemple permettre d'agir automatiquement sur la vitesse du véhicule ou sur le système de freinage par exemple en fonction de la valeur de la distance de visibilité et préférentiellement selon des critères de sécurité précédemment évoqués (distance de freinage, etc.). Il peut aussi permettre d'activer automatiquement les feux de brouillard.

Dans le cas d'un arrêt du véhicule, le procédé peut être adapté pour que les affichages ou actionnements automatiques précités restent activés un certain temps, en particulier au moins jusqu'au moment de l'arrêt total du moteur, voire quelques instants supplémentaires. En effet, dans une situation d'arrêt momentané (station service, péage, ralentissement dû aux encombrements de la circulation, etc.) le véhicule peut atteindre une vitesse nulle, alors qu'il convient de conserver les voyants de sécurité, en maintenant par exemple, les feux de brouillard allumés.

Ce procédé peut aussi être employé en statique pour observer une scène et rendre compte de la présence d'un brouillard et de la distance de visibilité. Dans ce cas, au moins une caméra peut par exemple être disposée sur une infrastructure routière et envoyer un signal vers au moins un panneau fixe disposé le long de l'infrastructure ou vers des véhicules pour leur indiquer passivement, comme évoqué de manière dynamique, tout type d'informations (vitesse limite de sécurité, étendue spatiale du brouillard, etc.) et éventuellement intervenir sur le véhicule automatiquement comme évoqué précédemment, en agissant par exemple sur le freinage ou les feux de brouillard.

Tous types d'échanges d'informations, par exemple à l'aide de signaux radio, permettraient d'intervenir entre la caméra et les véhicules ou entre les véhicules eux-mêmes. La multiplicité des points de mesure (à partir de plusieurs caméras ou véhicules) permettent d'indiquer régulièrement les évolutions spatiale et temporelle du brouillard et/ou de la distance de visibilité vers des panneaux d'affichages ou directement vers des véhicules.

Avantageusement, pour déterminer le coefficient d'extinction du brouillard :

- on fournit l'ordonnée de l'horizon pour la première image,
- on détermine l'ordonnée d'au moins un point d'inflexion de ladite courbe de luminance verticale,
- on compare ladite ordonnée du point d'inflexion à ladite ordonnée de l'horizon,
- on indique la présence de brouillard lorsque ladite ordonnée du point d'inflexion est située en dessous de ladite ordonnée de l'horizon,
- on calcule ledit coefficient d'extinction à partir de ladite ordonnée du point d'inflexion et de ladite ordonnée de l'horizon, et
- on détermine la distance de visibilité à partir dudit coefficient d'extinction.

L'ordonnée de l'horizon peut être par exemple fournie à partir du marquage sur la bande de roulement On déduit la distance de visibilité D à partir de la détermination de la valeur à l'ordonnée du point d'inflexion de la courbe de luminance. Dans ce cas, il est nécessaire de faire l'hypothèse que le sol présente un niveau de gris uniforme pour éviter toute interférence due aux irrégularités du revêtement par exemple.

Pour s'abstenir de l'hypothèse précitée, on effectue une seconde prise d'image, avant de déterminer la distance de visibilité. Ainsi, avantageusement, le procédé comporte en outre les étapes suivantes :

- on capture une seconde image dans la même direction et le même sens que ladite première image,
- on enregistre la luminance en chaque point de ladite seconde image,
- on effectue une homographie de ladite seconde image de manière à ramener cette dernière dans un repère de ladite première image et obtenir une image homographique,
- on applique un masque sur ladite image homographique pour obtenir une zone homographique de ladite image homographique,
- on effectue une moyenne des luminances de ladite zone homographique le long de l'abscisse de l'image homographique pour obtenir une courbe de luminance homographique verticale en fonction de chaque ordonnée de ladite zone homographique,
- on trace une courbe de luminance verticale qui en chaque ordonnée correspond à la différence des luminances entre les courbes de luminance de ladite zone et de ladite zone homographique,
- on fournit l'ordonnée de l'horizon pour ladite première image,

- on détermine l'ordonnée d'au moins un point d'inflexion de ladite courbe de différence de luminances verticales,
- on compare ladite ordonnée du point d'inflexion à ladite ordonnée de l'horizon,
- on indique la présence de brouillard lorsque ladite ordonnée du point d'inflexion est située en dessous de ladite ordonnée de l'horizon,
- on calcule ledit coefficient d'extinction à partir de ladite ordonnée du point d'inflexion et de ladite ordonnée de l'horizon, et
- on détermine la distance de visibilité à partir dudit coefficient d'extinction.

Dans le cas du déplacement du véhicule, les deux images correspondent à peu près à la même scène, mais prise à deux distances différentes pour un même objet dans la scène. Or, comme nous l'avons évoqué précédemment, l'effet visuel du brouillard dépend de la distance ; les deux images n'ayant pas été prises à la même distance, l'effet du brouillard sera différent. Le fait de comparer deux images de la même scène permet de tenir compte des irrégularités rencontrées sur la scène.

En fait, le déplacement du véhicule dans la scène produit une transformation homographique de l'image de la route. Ainsi, de manière à pouvoir comparer les niveaux de gris entre les deux images, il est nécessaire de réaliser une homographie de la seconde image, de manière à la ramener dans un repère identique à celui de la première image enregistrée. Ainsi, à partir de la loi de Koschmieder appliquée aux deux luminances, on obtient :

$$\begin{cases} L_1 = L_0 e^{-kd_1} + (1 - e^{-kd_1}) L_f \\ L_2 = L_0 e^{-kd_2} + (1 - e^{-kd_2}) L_f \end{cases}.$$

Les deux distances $d_2$ et $d_1$ étant liées par la distance d', parcourue par le véhicule, soit avec $d_2 = d_1 + d'$, on obtient alors :

$$L_1 - L_2 = (L_0 - L_f)(1 - e^{-kd'}) e^{-kd_1}.$$

Dans le cas d'un arrêt du véhicule, la distance d' est nulle et le procédé est comparable à celui à une seule prise d'image, puisque $L_2 = L_1$, sauf dans la situation très rare d'une évolution brutale et importante du brouillard entre les deux prises d'images.

Ainsi, en indiquant la valeur d' correspondant au déplacement du véhicule entre les deux prises d'images (directement reliée à la vitesse du véhicule), il suffit de rechercher le point d'inflexion sur la courbe de différence entre les deux luminances, pour obtenir le coefficient d'extinction k du brouillard permettant ensuite de calculer la distance de visibilité D.

Un calibrage géométrique de la capture d'image permet en outre avantageusement de déterminer les coefficients de la loi de Koschmieder permettant ensuite de déterminer le coefficient d'extinction du brouillard k et donc la distance de visibilité. Ce calibrage géométrique peut être effectué au préalable en comparant avantageusement les coordonnées de deux points connus sur ladite première image aux coordonnées desdits deux points dans la scène.

Avantageusement, la distance de visibilité (D) est calculée régulièrement à partir d'une image capturée sensiblement en continu.

Ainsi, même en cours de déplacement, la distance de visibilité est déterminée sensiblement continûment de sorte que toute évolution du brouillard est prise en compte (évolutions temporelle, spatiale, etc.) sensiblement en temps réel.

Combinée avec le procédé précité de détermination du point d'inflexion sur une première image, en présence de plusieurs points d'inflexion sur la courbe de luminance de cette dernière, la distance de visibilité peut être déterminée sur la courbe de différence entre les deux courbes de luminance qui, elle, ne présente généralement qu'un seul point d'inflexion commun aux deux courbes, ce dernier correspondant à celui qui permet de déterminer la présence de brouillard. En effet, sur une courbe de luminance, un point d'inflexion peut être dû à la présence de brouillard ou d'un obstacle, par exemple un véhicule de type camion placé dans la scène. La différence entre deux courbes de luminances de la même scène prise à deux instants différents permet alors d'éliminer les points d'inflexion communs qui correspondent généralement à ceux dus aux obstacles et de ne conserver que celui dû au brouillard.

Selon un autre mode de réalisation avantageux, on détermine le coefficient d'extinction du brouillard par minimisation de l'écart de luminance entre les courbes de ladite luminance verticale et de ladite luminance théorique, puis on calcule la distance de visibilité à partir dudit coefficient d'extinction obtenu. L'écart est déterminé en chaque point (ou ordonnée) à l'aide de la relation de Koschmieder, selon la formule suivante :

$$E = \sum (L_R - L_T)^2.$$

avec

$$\begin{cases} L_R \text{ représente la luminance réelle enregistrée sur l'image} \\ L_T \text{ représente la luminance théorique construite avec un k arbitraire} \end{cases}$$

En minimisant l'écart E de niveaux de gris (luminance) entre l'image observée et l'image construite avec un coefficient d'extinction du brouillard arbitraire, par exemple par une méthode classique de minimisation non linéaire fondée sur le gradient conjugué, on obtient le coefficient d'extinction du brouillard réel qui permet ensuite de calculer la distance de visibilité météorologique D. Ce procédé peut être employé seul ou en combinaison avec les procédés précités de manière à affiner les résultats, en particulier en présence de multiples points d'inflexion.

La détermination de la distance de visibilité peut aussi se faire sur deux prises d'images. En conséquence, le procédé comprend en outre avantageusement les étapes suivantes :

- on capture une seconde image dans la même direction et le même sens que ladite première image,
- on enregistre la luminance en chaque point de ladite seconde image,
- on effectue une homographie de ladite seconde image de manière à ramener cette dernière dans un repère de ladite première image et obtenir une image homographique,
- on applique un masque sur ladite image homographique pour obtenir une zone homographique,
- on effectue une moyenne de ladite luminance homographique le long de l'abscisse de l'image homographique pour obtenir une courbe de la luminance homographique en fonction de chaque ordonnée de ladite zone homographique,
- on trace une courbe de différence entre les deux courbes de luminances verticales qui en chaque ordonnée de ladite zone correspond à la différence des luminances entre les courbes de luminance de ladite zone et de ladite zone homographique,
- on construit une courbe de luminance théorique,
- on détermine ledit coefficient d'extinction (k) du brouillard par minimisation de l'écart (E) entre ladite courbe de différences de luminances ($L_{V1}$, $L_{VH2}$) de ladite première image (20) et ladite image homographique et ladite courbe de luminance théorique, puis on calcule la distance de visibilité à partir dudit coefficient d'extinction obtenu.

A partir du système des deux équations de Koschmieder pour les deux luminances :

$$\begin{cases} L_1 = L_0 e^{-kd_1} + (1 - e^{-kd_1}) L_f \\ L_2 = L_0 e^{-kd_2} + (1 - e^{-kd_2}) L_f \end{cases}$$

on détermine l'écart E entre les deux courbes de luminances $L_1$ et $L_2$ des deux images respectives par rapport à une courbe de luminance théorique, selon la même formule que précédemment :

$$E = \sum (L_R - L_T)^2$$

mais, cette fois

$$\begin{cases} L_R \text{ représente la différence entre les deux luminances réelles } L_1 \text{ et } L_2 \\ L_T \text{ représente la luminance théorique construite avec un k arbitraire} \end{cases}$$

Par exemple, la même méthode de minimisation que précitée basée sur le gradient conjugué ou toute autre méthode de minimisation permet de mener à bien cette minimisation. Dès lors, la distance de visibilité D est calculée selon la formule précitée à l'aide du coefficient d'extinction k du brouillard retenu.

Le second but de l'invention est de fournir un procédé qui permette de déterminer la présence d'un brouillard.

Ce second but de l'invention est atteint par le fait que le procédé comporte les étapes suivantes :

- on capture au moins une première image de la scène à partir du véhicule, préférentiellement selon une direction prise dans le sens de déplacement dudit véhicule,
- on fournit l'ordonnée de l'horizon pour ladite première image,
- on enregistre la luminance en chaque point de ladite première image,
- on applique un masque sur ladite première image pour obtenir une zone de ladite première image, et on effectue une moyenne de cette luminance le long de l'abscisse de ladite zone pour obtenir une courbe de la luminance verticale en fonction de chaque ordonnée de ladite zone, et qui présente au moins un point d'inflexion,
- on détermine l'ordonnée d'au moins un point d'inflexion de la courbe de luminance verticale,
- on compare ladite ordonnée du point d'inflexion à ladite ordonnée de l'horizon, et
- on indique la présence de brouillard lorsque ladite ordonnée du point d'inflexion est située en dessous de ladite ordonnée de l'horizon.

Ce procédé est particulièrement intéressant pour indiquer la présence de brouillard par exemple à l'aide d'un avertissement sonore ou lumineux qui s'afficherait sur un écran par exemple.

Utilisé en statique sur le bord de la route par exemple, ce procédé peut par exemple permettre de rendre attentifs les conducteurs par l'intermédiaire d'un affichage sur un panneau d'indication indiquant la présence de brouillard. Le sens du déplacement du véhicule est, dans ce cas, considéré comme étant celui du sens normal de circulation.

Utilisé à bord d'un véhicule, ce procédé devient dynamique et peut alors permettre d'informer à tout moment le conducteur de la présence d'un brouillard de manière passive, comme précédemment évoqué en activant un signal sonore ou lumineux dans l'habitacle du véhicule ou de manière active en agissant automatiquement sur l'allumage des feux de brouillard du véhicule.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels :

- la figure 1 est une représentation schématique d'un véhicule dans une scène,
- la figure 2 est une représentation schématique représentant le positionnement d'une caméra sur le véhicule de la figure 1 et une projection perspective d'un point de la scène,
- la figure 3 est une vue schématique de la projection perspective de la scène selon les flèches III-III de la figure 2,
- la figure 4 est une représentation schématique du procédé de détermination de la la distance de visibilité météorologique D,
- la figure 5 est une représentation schématique du procédé de détermination de la la distance de visibilité météorologique D selon un premier mode de réalisation à une prise d'image,
- la figure 6 est une représentation schématique du procédé de détermination de la la distance de visibilité météorologique D selon le premier mode de réalisation à deux prises d'image successives,
- la figure 7 est une représentation schématique analogue à celle de la figure 2, illustrant le déplacement du véhicule,
- la figure 8 est une représentation schématique du procédé de détermination de la la distance de visibilité météorologique D selon un second mode de réalisation à une prise d'image, et
- la figure 9 est une représentation schématique du procédé de détermination de la la distance de visibilité météorologique D selon un second mode de réalisation à deux prises d'image successives.

Quel que soit le procédé envisagé dans la présente invention, la détermination du brouillard et/ou de la distance de visibilité météorologique D, appelée distance de visibilité pour toute la suite, s'effectue toujours à partir de l'équation de Koschmieder :

$$L = L_0 e^{-kd} + (1 - e^{-kd}) L_f.$$

Cependant, pour pouvoir appliquer cette formule permettant de déterminer le coefficient d'extinction du brouillard k selon les différents modes de réalisation détaillés par la suite, il est nécessaire d'estimer la luminance du sol $L_0$, la luminance du ciel $L_f$ et la distance entre le point observé et l'observateur d. A partir de la prise d'une image de la scène observée, on obtient la luminance du sol $L_0$ et la luminance du ciel $L_f$, qui sont directement proportionnelles aux niveaux de gris enregistré sur l'image observée ; il ne reste donc plus qu'à déterminer la distance entre le point observé et l'observateur d pour accéder au coefficient d'extinction k du brouillard.

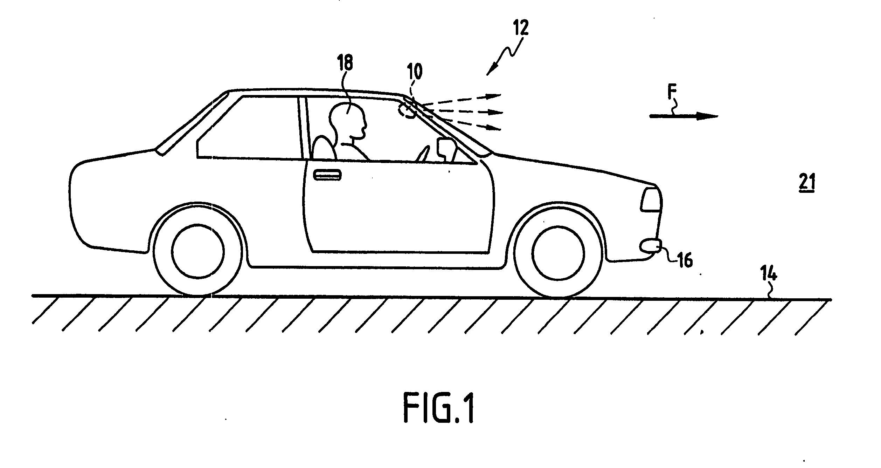

La figure 1 représente un moyen d'obtention dynamique de la distance de visibilité D à l'aide d'une caméra 10 embarqué sur un véhicule 12 préférentiellement en mouvement sur une route 14.

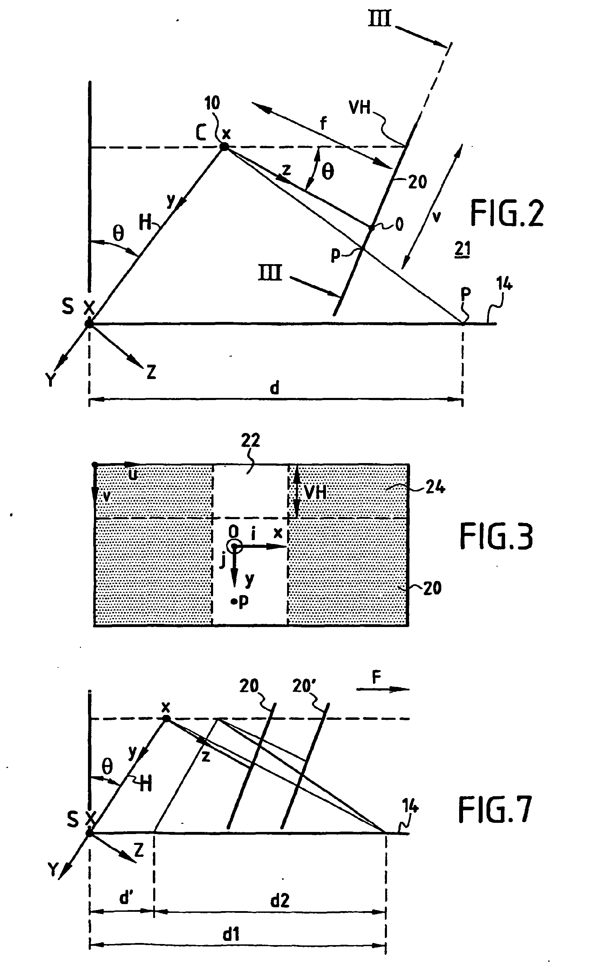

La distance d est reliée à la position de la caméra 10 sur le véhicule 12. La caméra 10, par exemple de type CCD enregistrant la luminance de la scène 21 en niveaux de gris, est préférentiellement située sur l'avant du véhicule 12 ou sur le côté de celui-ci, en étant par exemple fixée derrière le pare-brise (non représenté) du véhicule 12 et pointe vers l'avant de la scène 21 dans le sens F de déplacement habituel du véhicule 12, pour enregistrer une image 20 correspondant à la vision qu'a un conducteur 18 à travers le pare-brise. Sur la figure 2, l'image 20 correspond à l'image enregistrée par la caméra 10 placée au point C et est artificiellement disposée vers l'avant de la scène 21 pour des commodités de repères et de calculs.

La caméra peut aussi être disposée sur un rétroviseur extérieur (non représenté) ou au voisinage du pare-chocs 16 du véhicule 12. Dans ce cas, l'ensemble de la caméra 10 est préférentiellement protégé des agressions extérieures (pluie, salissures, choc, etc.) en étant par exemple placé derrière une paroi transparente ; dans le cas contraire, un système de nettoyage de l'objectif de la caméra est nécessaire.

Selon le modèle perspectif couramment utilisé en vision, la distance d peut être obtenue à partir des paramètres de la caméra 10 (distance focale, géométrie des pixels, etc.) et de son orientation sur le véhicule 12.

La figure 2 illustre un tel modèle perspectif dans lequel la caméra 10 est placée au centre C dans un repère (C, x, y z) tel que l'axe z est situé le long de l'axe optique de la caméra et donc normal au plan de l'image 20 situé à une distance focale f de la caméra 10. Pour toute la suite, l'image et son plan sont référencés 20. Le repère (S, X, Y, Z) est un repère lié à la scène 21 dont le centre S est situé en retrait dans la scène pour des commodités de calculs. En fait, le centre S est placé à l'intersection d'une route 14 et de l'axe y du repère lié à la caméra 10. L'axe Y de la scène est confondu avec l'axe y de la caméra. H représente alors la distance entre le centre C de la caméra et le centre S de la scène 21.

VH correspond à l'intersection du plan de l'image 20 et d'un plan parallèle à la route 14 passant par le centre C de la caméra 10. Sur la figure 2, $V_H$ correspond à l'ordonnée de la ligne de l'horizon dans le plan image 20, passant par le centre C du repère de la caméra et θ représente l'angle entre la ligne $V_H$ et l'axe optique z de la caméra, ce qui correspond à l'inclinaison de la caméra par rapport à l'horizontale. L'axe optique peut aussi être indiqué en recherchant le point de fuite de l'image 20. Le point O représente le centre de l'image 20.

Comme illustré sur les figures 2 et 3, un point P de la scène 21 de coordonnées (x, y, z) dans le repère de la caméra 10 est alors projeté en un point p de coordonnées (U, V) dans le repère image 20.

En supposant que les pixels soient carrés de longueur de côté t, on obtient :

$$d = \frac{\lambda_V}{(V - V_H)} \text{ avec } \lambda_V = \frac{fH}{t\cos\theta}$$

Par exemple, un calibrage géométrique de la caméra 10, préalable à l'utilisation du procédé, généralement réalisé par l'installateur du dispositif permettant de réaliser le procédé, permet de déterminer le paramètre $\lambda_V$ qui dépend de la position et de l'inclinaison de la caméra 10 et d'en déduire la relation entre la distance d et l'ordonnée V. En connaissant la distance réelle entre deux points sur l'image de coordonnées $V_1$ et $V_2$, on en déduit aisément le paramètre $\lambda_V$ par la formule suivante :

$$\lambda_V = \frac{d_1 - d_2}{\left( \dfrac{1}{V_1 - V_H} - \dfrac{1}{V_2 - V_H} \right)}.$$

En choisissant par exemple la distance entre deux bandes de marquage routier dont l'écartement est connu, par exemple sur une autoroute le marquage central présente des bandes successives distantes de 20 m (non représenté), on en déduit le paramètre $\lambda_V$ et donc la relation entre la distance d et l'ordonnée V pour toute la suite.

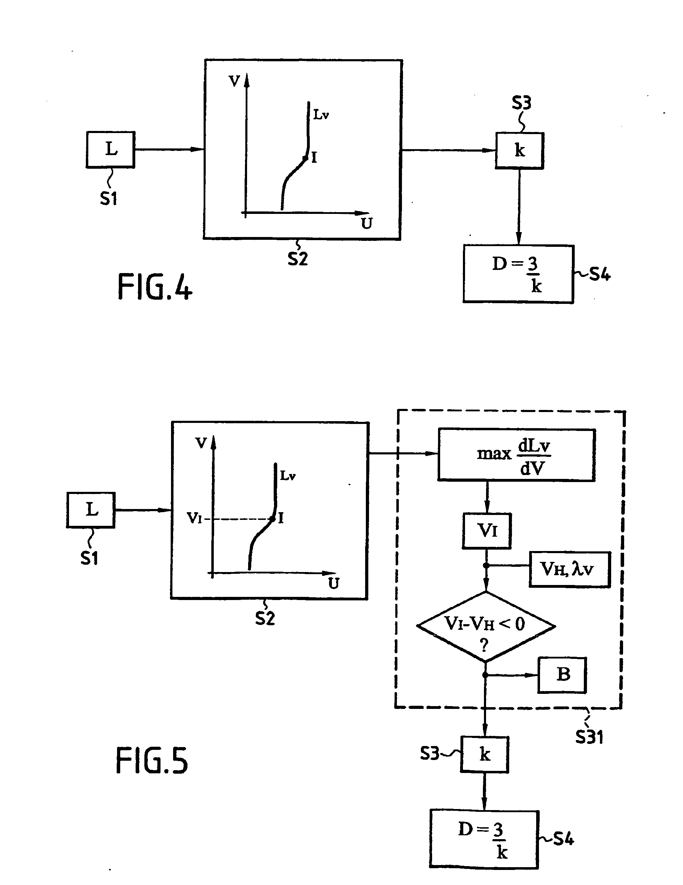

Ainsi, à partir de la capture d'une première image S1, représentée schématiquement sur la figure 4, on enregistre les niveaux de gris pour chacun des pixels de la caméra 10, préférentiellement dans le sens de déplacement F, correspondant à la luminance L de chacun des pixels. Puis, on effectue une moyenne des luminances L le long de chaque ligne i de l'image 20 selon chaque colonne j, en choisissant i et j dans une zone 22 délimitée par un masque 24 (illustré sur la figure 3), soit de la luminance le long de l'abscisse u pour obtenir en S2 une courbe de luminance verticale Lv présentant généralement au moins un point d'inflexion I. Pour chaque ligne i d'ordonnée V, on a la relation de Koschmieder :

$$L_i = L_0 e^{-kd} + (1 - e^{-kd}) L_f.$$

Le masque 24 est préférentiellement choisi de forme sensiblement rectangulaire centré sur l'image 20 de manière à faire apparaître les bandes centrales de roulement (non illustrées) de la route 14. Selon la nature de la scène 21 à observer, la géométrie de ce masque 24 est facilement adaptable en faisant varier les plages des variables i et j.

A partir de la courbe de luminance verticale Lv, on en déduit le coefficient k d'extinction du brouillard en S3, qui correspond, rappelons-le à la mesure des propriétés d'absorption et de dispersion de la lumière et qui permet de déterminer en 54 la distance de visibilité D à partir de la relation :

$$DVM = \frac{3}{k}.$$

L'obtention de l'étape S3 de détermination du coefficient d'extinction k du brouillard dépend du mode de réalisation envisagé.

Ainsi, selon un premier mode de réalisation, l'obtention de S3 est basée sur une analyse locale de l'image avec une détermination d'au moins un point d'inflexion sur la courbe de luminance.

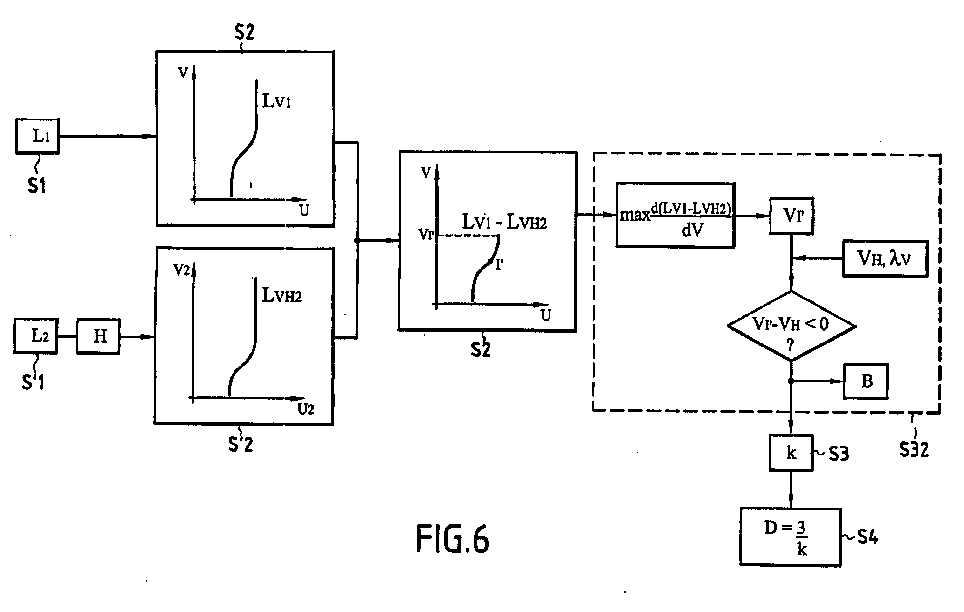

Ce premier mode de réalisation effectué à partir de la prise d'une première image est représenté sur la figure 5. Un point d'inflexion I est déterminé sur la courbe de luminance verticale Lv par dérivation de cette dernière par rapport à l'ordonnée V de l'image, représentées en S31. En effet, l'ordonnée $V_I$ du point d'inflexion I est l'ordonnée qui correspond au maximum de cette dérivation première. Par ailleurs, nous savons mathématiquement qu'en ce point d'inflexion $V_I$, la dérivée seconde s'annule, ce qui permet de déterminer k, puis D, puisqu'au point d'inflexion on a :

$$k = \frac{2(V_I - V_H)}{\lambda_v}$$

ou

$$\begin{cases} V_H \text{ représente l'ordonnée de la ligne d'horizon} \\ \lambda_v \text{ représente le paramètre de calibration} \end{cases}.$$

En présence de plusieurs points d'inflexion I, le point d'inflexion I qui est le plus proche de la ligne d'horizon $V_H$ est retenu pour effectuer la comparaison d'ordonnées. En général, les autres points d'inflexion ne sont pas représentatifs du brouillard, mais des obstacles dans la scène, comme par exemple un camion situé devant le véhicule 12.

Lorsque le procédé est limité à la détermination de la présence d'un brouillard et non à la valeur de la distance de visibilité, il s'agit uniquement de réaliser les étapes S1, S2 et S31 et d'indiquer la présence du brouillard B par tout type de système d'alerte (émission sonore, voyant lumineux, etc.). La présence de brouillard B est indiquée lorsque le point d'inflexion I se situe en dessous de la ligne d'horizon vers le bas de la zone 22. Ce qui revient, dans le cas du repère indiqué sur la figure 3, dont l'axe V est orienté vers le bas de l'image, à indiquer la présence de brouillard, lorsque la différence des ordonnées des deux points $V_I$ et $V_H$ est positive et vice versa. En effet, dans le cas d'un repère orienté dans le sens opposé c'est-à-dire dont l'axe V pointe vers le haut de l'image, le brouillard est indiqué lorsque la différence des ordonnées des deux points $V_I$ et $V_H$ est négative.

Comme illustré en figure 6, le même procédé expliqué plus en détails d'après peut être appliqué à deux prises d'images successivement enregistrées préférentiellement au cours du déplacement du véhicule dans le sens F.

Ce procédé peut en outre être combiné au procédé précité à une seule prise d'image dans le cas où la courbe de luminance présenterait plusieurs points d'inflexion I. En effet, comme évoqué précédemment même en présence de plusieurs points d'inflexion, la courbe de différence des luminances entre deux images ne présente généralement plus qu'un seul point d'inflexion correspondant alors au point recherché et permettant de déterminer la présence de brouillard et la distance de visibilité D.

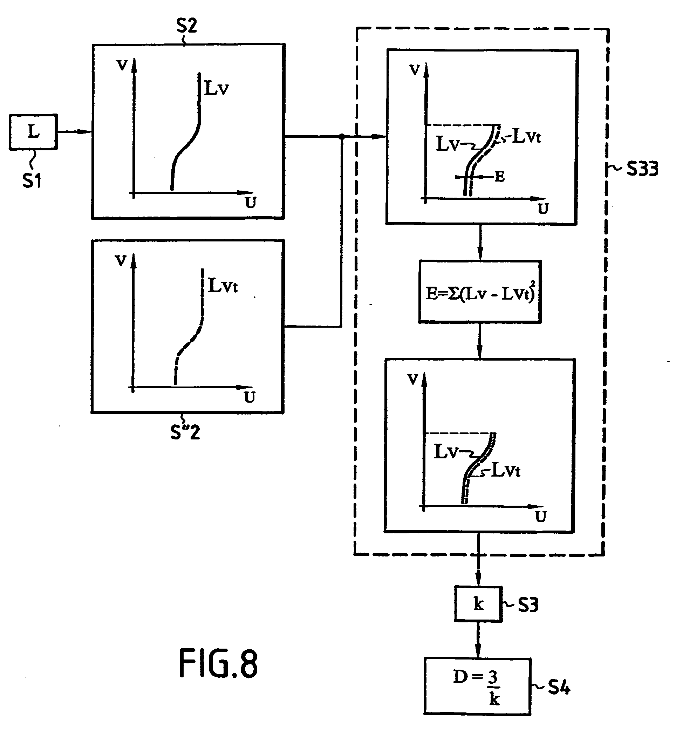

La capture d'une seconde image 20', comme illustré en S'1 sur la figure 7, prise à une distance $d_2$ écartée de la distance $d_1$ de la première image 20 d'une distance d' parcourue par le véhicule, préférentiellement en déplacement dans le sens F de prise d'image, permet d'obtenir une seconde image de la scène 21 en S'2.

Cependant, pour pouvoir comparer les deux images, il est nécessaire qu'elles soient dans le même repère. Ainsi une transformation homographique H est appliquée à la seconde image 20' selon le système d'équations suivant pour la ramener dans le repère de la première image :

$$\begin{cases} U_2 = U_1 \dfrac{d_1}{d_1 - d'} \\ V_2 = V_1 \dfrac{d_1}{d_1 - d'} \end{cases}.$$

Dans ce cas de la prise de deux images 20 et 20', le même masque 24 est appliqué à la seconde image 20' qui a subi la transformation homographique.

La capture de la seconde image 20', permet alors d'obtenir en S'2 après transformation homographique, une seconde courbe de luminance verticale $L_{VH2}$. Les étapes S'1 et S'2 sont analogues aux étapes S1 et S2 pour la prise de la première image à la distance $d_1$.

Un capteur de vitesse par exemple (non représenté) permet de fournir la distance d' parcourue par le véhicule 12.

On effectue ensuite en chaque ordonnée V, la différence entre les deux courbes $L_{VH2}$ et $L_{V1}$ de manière à obtenir une courbe $L_{V1}$-$L_{VH2}$ qui ne présente généralement qu'un seul point d'inflexion I'. D'après la loi de Koschmieder, on a alors :

$$L_{V1} - L_{VH2} = (L_0 - L_f)(e^{-kd_1} - e^{-kd_2}).$$

On recherche le maximum de la dérivée première de cette dernière courbe $L_{V1}$-$L_{VH2}$ par rapport à l'ordonnée V pour obtenir dans une étape S32, la valeur de l'ordonnée $V_I$, du point d'inflexion I' qui permet, comme dans le cas d'une seule prise d'image de trouver k, puis D.

Selon un second mode de réalisation, l'obtention de l'étape S3 est basée sur une analyse globale de l'image avec une minimisation de l'écart entre des images ou plutôt des courbes. Ce procédé peut aussi être combiné au premier mode de réalisation à une seule prise d'image, en particulier lorsque la courbe de luminance présente plusieurs points d'inflexion, de manière à affiner la détermination de la distance de visibilité D.

Il s'agit dans ce second mode de réalisation à une image, de minimiser l'écart entre une image réellement observée et enregistrée, et une image construite à partir d'un modèle théorique représenté schématiquement sur la figure 8, dans une étape 533.

Comme pour le premier mode de réalisation, on enregistre en S1 la luminance d'une image 20 (figure 1) de la scène 21 qui est moyennée en S2 selon chaque ligne de l'image pour obtenir une courbe de luminance verticale Lv qui représente la luminance moyenne réelle. On construit par ailleurs en S'2 une courbe de luminance verticale théorique Lvt qui est ensuite comparée en chaque ordonnée U à la courbe de luminance moyenne réelle Lv. L'écart E est ensuite obtenu en faisant la différence entre ces deux courbes Lv et Lvt :

$$E = \sum (Lv - Lvt)^2.$$

Cette minimisation non linéaire est effectuée par une méthode connue de minimisation fondée sur le gradient conjugué et n'est donc pas exposée.

Dès lors que l'écart E est minimal, on en déduit les valeurs des luminances $L_0$ et $L_f$ et le coefficient k d'extinction du brouillard qui permet de déterminer la distance de visibilité D.

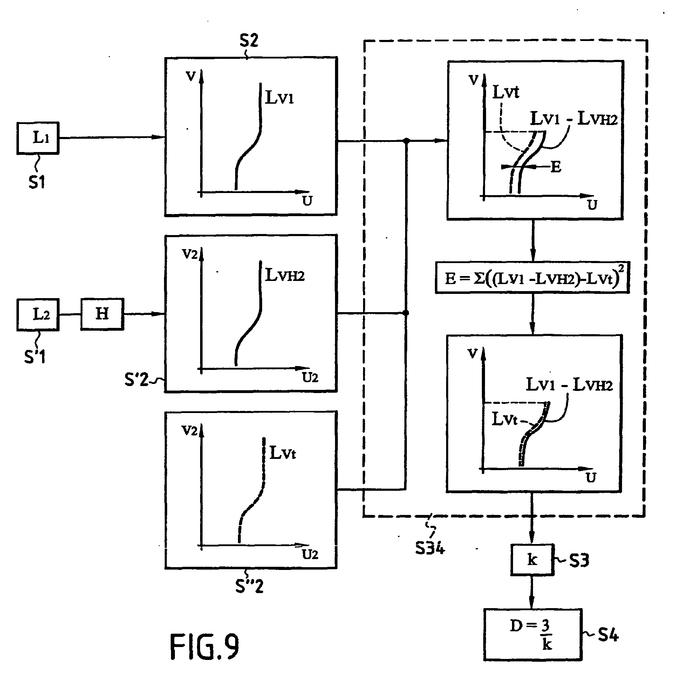

Ce second mode de réalisation peut aussi être, comme le premier, étendu à la prise d'une seconde image 20' (figure 7), comme illustré sur la figure 9. Dans ce cas, la courbe théorique Lvt est comparée à la courbe de différence de luminances verticales entre les luminances $L_{V1}$, et $L_{VH2}$, obtenues respectivement entre une première 20 et une seconde Image 20' préalablement ramenée par homographie dans le repère de la première image 20 selon le même principe que celui décrit pour le premier mode de réalisation. L'écart entre les courbes est minimisé à partir de la formule suivante.

$$E = \sum \left( (L_{V1} - L_{V2}) - Lvt \right)^2$$

Les courbes de luminances présentent généralement d'une image à l'autre, le même type d'allure et une partie confondue qui lors de la différence s'annule. Il s'ensuit que la comparaison entre les courbes de luminances théorique Lvt et de différence $L_{V1}$-$L_{V2}$ ne s'effectue que sur les zones présentant la même allure, de manière à pouvoir minimiser l'écart entre les deux. Pour ce faire, il convient d'effectuer cette différence dans une plage d'ordonnées j adaptée.

On effectue ensuite dans une même étape 534, une minimisation de l'écart E entre la courbe de luminance théorique Lvt et la courbe de différence $L_{V1}$-$L_{VH2}$ de la même manière que précédemment évoquée pour la minimisation à une seule prise d'image, à partir de la relation suivante :

$$E = \sum (L_{V1} - L_{VH2}) - Lvt)^2 . .$$

On en déduit alors $L_0$, $L_f$ et k, puis D.

Ces différents procédés pris séparément ou en combinaison entre eux, peuvent ensuite permettre d'alerter le conducteur 18 du véhicule 12 soit de manière passive, par exemple à l'aide d'un affichage ou en émettant un signal sonore, soit de manière active en agissant directement sur des organes de commande du véhicule 12, par exemple pour actionner des feux de brouillard. Ils peuvent aussi permettre de réguler la vitesse du véhicule 12 proportionnellement à la distance de visibilité en agissant automatiquement sur la vitesse du véhicule ou l'actionnement du système de freinage.

En outre, quel que soit le mode de réalisation retenu, ces procédés réalisés de manière sensiblement continue en réitérant successivement les étapes de prise d'image S1 et de traitement de l'information S2 à S4, permettent de déterminer le brouillard et la distance de visibilité en temps réel et de réajuster automatiquement les valeurs en fonction de la scène 21 observée. En particulier, toute évolution de la vision du brouillard due au déplacement du véhicule 12 ou à l'évolution propre du brouillard est prise en compte et évaluée sensiblement en temps réel.

**Revendications**

1.   Procédé de détermination de la distance de visibilité, en particulier à partir d'un véhicule (12) dans une scène (21), **caractérisé en ce que** :

  - on capture au moins une première image (20) de ladite scène (21) à partir du véhicule, préférentiellement dans le sens de déplacement (F) dudit véhicule (12),
  - on enregistre la luminance (L ; $L_1$) en chaque point de ladite première image (20),
  - on applique un masque (24) sur ladite première image (20) pour obtenir une zone (22) de ladite première image (20) et on effectue une moyenne de cette luminance (L ; $L_1$) le long de l'abscisse de ladite zone (22) pour obtenir une courbe de la luminance verticale ($L_V$ ; $L_{V1}$) en fonction de chaque ordonnée (V) de ladite zone (22), et qui présente au moins un point d'inflexion (I),
  - on détermine un coefficient d'extinction (k) du brouillard à partir de ladite courbe de la luminance verticale ($L_V$ ; $L_{V1}$), et
  - on calcule la distance de visibilité (D) à partir dudit coefficient d'extinction (k).

2.   Procédé de détermination de la distance de visibilité, selon la revendication précédente, **caractérisé en ce que** pour déterminer ledit coefficient d'extinction (k) du brouillard,

  - on fournit l'ordonnée de l'horizon ($V_H$) pour ladite première image (20),
  - on détermine l'ordonnée ($V_I$) d'au moins un point d'inflexion (I) de ladite courbe de luminance verticale ($L_V$ ; $L_{V1}$),
  - on compare ladite ordonnée ($V_I$) du point d'inflexion (I) à ladite ordonnée de l'horizon ($V_H$),
  - on indique la présence de brouillard (B) lorsque ladite ordonnée du point d'inflexion est située en dessous de ladite ordonnée de l'horizon,
  - on calcule ledit coefficient d'extinction (k) à partir de ladite ordonnée du point d'inflexion ($V_I$) et de ladite ordonnée de l'horizon ($V_H$), et

- on détermine la distance de visibilité à partir dudit coefficient d'extinction (k).

3. Procédé de détermination de la distance de visibilité, selon l'une quelconque des revendications précédentes, **caractérisé en ce que** :

- on capture une seconde image (20') dans la même direction et le même sens (F) que ladite première image (20),
- on enregistre la luminance ($L_2$) en chaque point de ladite seconde image (20'),
- on effectue une homographie (H) de ladite seconde image (20') de manière à ramener cette dernière dans un repère (C, x, y, z) de ladite première image (20) et obtenir une image homographique,
- on applique un masque (24) sur ladite image homographique pour obtenir une zone homographique de ladite image homographique,
- on effectue une moyenne des luminances de ladite zone homographique le long de l'abscisse (U) de l'image homographique pour obtenir une courbe de luminance homographique verticale ($L_{VH2}$) en fonction de chaque ordonnée (V) de ladite zone homographique,
- on trace une courbe de différence de luminances verticales ($L_{V1}$-$L_{VH2}$) qui en chaque ordonnée (V) correspond à la différence des luminances entre les courbes de luminance de ladite première image ($L_{V1}$) et de ladite image homographique ($L_{VH2}$),
- on fournit l'ordonnée de l'horizon ($V_H$) pour ladite première image (20),
- on détermine l'ordonnée ($V_{I'}$) d'au moins un point d'inflexion (I') de ladite courbe de différence de luminances verticales ($L_{V1}$-$L_{VH2}$),
- on compare ladite ordonnée ($V_{I'}$) du point d'inflexion (I') à ladite ordonnée de l'horizon ($V_H$),
- on indique la présence de brouillard (B) lorsque ladite ordonnée ($V_{I'}$) du point d'inflexion (I') est située en dessous de ladite ordonnée de l'horizon ($V_H$),
- on calcule ledit coefficient d'extinction (k) à partir de ladite ordonnée du point d'inflexion ($V_{I'}$) et de ladite ordonnée de l'horizon ($V_H$), et
- on détermine la distance de visibilité (D) à partir dudit coefficient d'extinction (k).

4. Procédé selon l'une quelconque des revendications précédentes, **caractérisé en ce que** l'on effectue en outre un calibrage géométrique ($\lambda_V$) de ladite capture d'image.

5. Procédé selon la revendication précédente, **caractérisé en ce que** ledit calibrage géométrique ($\lambda_V$) est réalisé en comparant les coordonnées de deux points connus sur ladite première image (20) aux coordonnées desdits deux points dans ladite scène (21).

6. Procédé selon l'une quelconque des revendications précédentes, **caractérisé en ce que** ladite distance de visibilité (D) est calculée régulièrement à partir d'au moins une image (L1 ; L2) capturée sensiblement en continu.

7. Procédé de détermination de la distance de visibilité, selon l'une quelconque des revendications précédentes, **caractérisé en ce que** l'on construit une courbe de luminance verticale théorique ($L_{Vt}$) et **en ce que** l'on détermine ledit coefficient d'extinction (k) du brouillard par minimisation de l'écart de luminance (E) en chaque ordonnée (V) entre les courbes de ladite luminance verticale ($L_V$) et de ladite luminance théorique (Lvt), puis on calcule la distance de visibilité (D) à partir dudit coefficient d'extinction obtenu (k).

8. Procédé de détermination de la distance de visibilité, selon l'une quelconque des revendications précédentes, **caractérisé en ce que** :

- on capture une seconde image (20') dans la même direction et le même sens (F) que ladite première image (20),
- on enregistre la luminance ($L_2$) en chaque point de ladite seconde image (20'),
- on effectue une homographie (H) de ladite seconde image (20') de manière à ramener cette dernière dans un repère (C, x, y, z) de ladite première image (20) et obtenir une image homographique,
- on applique un masque (24) sur ladite image homographique pour obtenir une zone homographique,
- on effectue une moyenne de ladite luminance le long de l'abscisse (U) de l'image homographique pour obtenir une courbe de la luminance homographique ($L_{VH2}$) en fonction de chaque ordonnée (V) de ladite zone homographique,
- on trace une courbe de différence entre les deux courbes de luminances verticales ($L_{V1}$-$L_{VH2}$) qui en chaque ordonnée de ladite zone correspond à la différence des luminances entre les courbes de luminance de ladite zone ($L_{V1}$) et de ladite zone homographique ($L_{VH2}$),
- on construit une courbe de luminance verticale théorique ($L_{Vt}$),

- on détermine ledit coefficient d'extinction (k) du brouillard par minimisation de l'écart (E) entre ladite courbe de différences de luminances ($L_{V1}$-$L_{VH2}$) de ladite première image (20) et ladite image homographique et ladite courbe de luminance théorique (Lvt), puis on calcule la distance de visibilité (D) à partir dudit coefficient d'extinction (k) obtenu.

9. Procédé de détermination de la présence d'un brouillard, en particulier à partir d'un véhicule (12) dans une scène (21), **caractérisé en ce que** :

- on capture au moins une première image (20) de la scène (21) à partir du véhicule (12), préférentiellement selon une direction (F) prise dans le sens de déplacement dudit véhicule (12),
- on fournit l'ordonnée de l'horizon ($V_H$) pour ladite première image (20),
- on applique un masque (24) sur ladite première image (20) pour obtenir une zone (22) de ladite première image (20),
- on enregistre la luminance (L) en chaque point de ladite première image (20), on effectue une moyenne de cette luminance le long de l'abscisse (U) de ladite zone (22) pour obtenir une courbe de la luminance verticale ($L_v$) en fonction de chaque ordonnée (V) de ladite zone (22), et qui présente au moins un point d'inflexion (I),
- on détermine l'ordonnée ($V_I$) d'au moins un point d'inflexion (I) de la courbe de luminance verticale ($L_v$),
- on compare ladite ordonnée ($V_I$) du point d'inflexion à ladite ordonnée de l'horizon ($V_H$), et
- on indique la présence de brouillard (B) lorsque ladite ordonnée du point d'inflexion ($V_I$) est située en dessous de ladite ordonnée de l'horizon ($V_H$).

**Claims**

1. Method for determining the visibility distance, particularly of a vehicle (12) in a scene (21),
   **characterised in that**:

   - a first image (20) of the said scene (21) is acquired from the vehicle, preferably in the sense of movement (F) of the said vehicle (12),
   - the luminance (L; $L_1$) at each point of the said first image (20) is recorded,
   - a mask (24) is applied to the said first image (20) in order to obtain a zone (22) of the said first image (20), and an average of this luminance (L; $L_1$) is taken along the abscissa of the said zone (22) in order to obtain a curve of the vertical luminance ($L_V$; $L_{V1}$) as a function of each ordinate (V) of the said zone (22), which has at least one point of inflection (I),
   - an extinction coefficient (k) of the fog is determined on the basis of the said curve of the vertical luminance ($L_V$; $L_{V1}$), and
   - the visibility distance (D) is calculated on the basis of the said extinction coefficient (k).

2. Method for determining visibility distance according to the preceding claim, **characterised in that** in order to determine the said extinction coefficient (k) of the fog,

   - the ordinate of the horizon ($V_H$) for the said first image (20) is supplied,
   - the ordinate ($V_I$) of at least one point of inflection (I) of the said curve of the vertical luminance ($L_V$; $L_{V1}$) is determined,
   - the said ordinate ($V_I$) of the point of inflection (I) is compared with the said ordinate of the horizon ($V_H$),
   - the presence of fog (B) is indicated when the said ordinate of the point of inflection lies below the said ordinate of the horizon,
   - the said extinction coefficient (k) is calculated on the basis of the said ordinate of the point of inflection ($V_I$) and the said ordinate of the horizon ($V_H$), and
   - the visibility distance is determined on the basis of the said extinction coefficient (k).

3. Method for determining visibility distance according to either one of the preceding claims, **characterised in that**:

   - a second image (20') is acquired in the same direction and the same sense (F) as the said first image (20),
   - the luminance ($L_2$) at each point of the said second image (20') is recorded,
   - a homography (H) of the said second image (20') is carried out in order to bring it into a reference frame (C, x, y, z) of the said first image (20) and obtain a homographic image,
   - a mask (24) is applied to the said homographic image in order to obtain a homographic zone of the said homographic image,

- an average of the luminances of the said homographic zone is taken along the abscissa (U) of the homographic image in order to obtain a curve of vertical homographic luminance ($L_{VH2}$) as a function of each ordinate (V) of the said homographic zone,

- a difference curve of vertical luminances ($L_{V1}$-$L_{VH2}$) is plotted, which corresponds at each ordinate (V) to the difference in the luminances between the luminance curves of the said first image ($L_{V1}$) and the said homographic image ($L_{VH2}$),

- the ordinate of the horizon ($V_H$) for the said first image (20) is supplied,

- the ordinate ($V_I$') of at least one point of inflection (I') of the said difference curve of vertical luminances ($L_{V1}$-$L_{VH2}$) is determined,

- the said ordinate ($V_I$') of the point of inflection (I') is compared with the said ordinate of the horizon ($V_H$),

- the presence of fog (B) is indicated when the said ordinate ($V_I$') of the point of inflection (I') lies below the said ordinate of the horizon ($V_H$),

- the said extinction coefficient (k) is calculated on the basis of the said ordinate of the point of inflection ($V_I$') and the said ordinate of the horizon ($V_H$), and

- the visibility distance is determined on the basis of the said extinction coefficient (k).

4. Method according to any one of the preceding claims, **characterised in that** geometrical calibration ($\lambda_V$) of the said image acquisition is furthermore carried out.

5. Method according to the preceding claim, **characterised in that** the said geometrical calibration ($\lambda_V$) is carried out by comparing the coordinates of two known points on the said first image (20) with the coordinates of the said two points in the said scene (21).

6. Method according to any one of the preceding claims, **characterised in that** the said visibility distance (D) is calculated regularly on the basis of at least one image (L1; L2) acquired substantially continuously.

7. Method for determining the visibility distance according to any one of the preceding claims, **characterised in that** a curve of theoretical vertical luminance ($L_{Vt}$) is constructed, and **in that** the said extinction coefficient (k) of the fog is determined by minimising the discrepancy in luminance (E) at each ordinate (V) between the curves of the said vertical luminance ($L_V$) and of the said theoretical luminance ($L_{Vt}$), then the visibility distance (D) is calculated on the basis of the said extinction coefficient obtained (k).

8. Method for determining the visibility distance according to any one of the preceding claims, **characterised in that**:

- a second image (20') is acquired in the same direction and the same sense (F) as the said first image (20),
- the luminance ($L_2$) at each point of the said second image (20') is recorded,
- a homography (H) of the said second image (20') is carried out in order to bring it into a reference frame (C, x, y, z) of the said first image (20) and obtain a homographic image,
- a mask (24) is applied to the said homographic image in order to obtain a homographic zone,
- an average of the said luminance is taken along the abscissa (U) of the homographic image in order to obtain a curve of homographic luminance ($L_{VH2}$) as a function of each ordinate (V) of the said homographic zone,
- a difference curve is plotted between the two vertical luminance curves ($L_{V1}$-$L_{VH2}$), which corresponds at each ordinate of the said zone to the difference in the luminances between the luminance curves of the said zone ($L_{V1}$) and the said homographic zone ($L_{VH2}$),
- a curve of theoretical luminance ($L_{Vt}$) is constructed,
- the said extinction coefficient (k) of the fog is determined by minimising the discrepancy (E) between the said curve of luminance differences ($L_{V1}$-$L_{VH2}$) of the said first image (20) and the said homographic image and the said curve of theoretical luminance ($L_{Vt}$), then the visibility distance (D) is calculated on the basis of the said extinction coefficient obtained (k).

9. Method for determining the presence of fog, particularly from a vehicle (12) in a scene (21), **characterised in that**:

- at least one first image (20) of the said scene (21) is acquired from the vehicle (12), preferably in a direction taken in the sense of movement (F) of the said vehicle (12),
- the ordinate of the horizon ($V_H$) for the said first image (20) is supplied,
- a mask (24) is applied to the said first image (20) in order to obtain a zone (22) of the said first image (20),

- the luminance (L) at each point of the said first image (20) is recorded, an average of this luminance is taken along the abscissa (U) of the said zone (22) in order to obtain a curve of the vertical luminance ($L_V$) as a function of each ordinate (V) of the said zone (22), which has at least one point of inflection (I),

- the ordinate ($V_I$) of at least one point of inflection (I) of the said curve of the vertical luminance ($L_V$) is determined,

- the said ordinate ($V_I$) of the point of inflection is compared with the said ordinate of the horizon ($V_H$), and

- the presence of fog (B) is indicated when the said ordinate of the point of inflection ($V_I$) lies below the said ordinate of the horizon ($V_H$) .

**Patentansprüche**

1. Verfahren zur Sichtweitenbestimmung, insbesondere von einem Fahrzeug (21) aus in einer Szene (21), **dadurch gekennzeichnet, dass**:

 - man wenigstens ein erstes Bild (20) der Szene (21) vom Fahrzeug aus, vorzugsweise in der Bewegungsrichtung (F) des Fahrzeugs (12), aufnimmt,
 - man die Leuchtdichte (L ; $L_1$) in jedem Punkt des ersten Bildes (20) erfasst,
 - man eine Maske (24) auf das erste Bild (20) anwendet, um einen Bereich (22) des ersten Bildes (20) zu erhalten und man einen Mittelwert dieser Leuchtdichte (L ; $L_1$) entlang der Abszisse des Bereichs (22) bildet, um eine Kurve der vertikalen Leuchtdichte ($L_V$ ; $L_{V1}$) in Abhängigkeit jedes Ordinatenwertes (V) des Bereichs zu erhalten, und die wenigstens einen Wendepunkt (I) aufweist,
 - man einen Extinktionskoeffizienten (k) des Nebels, ausgehend von der Kurve der vertikalen Leuchtdichte ($L_V$ ; $L_{V1}$) bestimmt, und
 - man die Sichtweite (D) von dem Extinktionskoeffizienten (k) aus bestimmt.

2. Verfahren zur Sichtweitenbestimmung nach dem vorhergehenden Anspruch, **dadurch gekennzeichnet, dass** zur Bestimmung des Extinktionskoeffizienten (k) des Nebels,

 - man den Ordinatenwert des Horizonts ($V_H$) für das erste Bild (20) liefert,
 - man den Ordinatenwert ($V_I$) von wenigstens einem Wendepunkt (I) der Kurve der vertikalen Leuchtdichte ($L_V$; $L_{V1}$) bestimmt,
 - man den Ordinatenwert ($V_I$) des Wendepunkts (I) mit dem Ordinatenwert des Horizonts ($V_H$) vergleicht,
 - man die Anwesenheit von Nebel (B) anzeigt, wenn der Ordinatenwert des Wendepunkts unter dem Ordinatenwert des Horizonts liegt,
 - man den Extinktionskoeffizienten (k) ausgehend von dem Ordinatenwert des Wendepunkts ($V_I$) und dem Ordinatenwert des Horizonts ($V_H$) berechnet, und
 - man die Sichtweite ausgehend von diesem Extinktionskoeffizienten (k) bestimmt.

3. Verfahren zur Sichtweitenbestimmung nach einem der vorhergehenden Ansprüche, **dadurch gekennzeichnet, dass**

 - man ein zweites Bild (20') in derselben Richtung (F) und demselben Sinn wie das erste Bild (20) aufnimmt,
 - man die Leuchtdichte ($L_2$) in jedem Punkt des zweiten Bilds (20') erfasst,
 - man eine Homographie (H) des zweiten Bildes (20') so durchführt, dass letzteres in ein Koordinatensystem (C, x, y, z) des ersten Bildes (20) zurückgeführt wird und man ein homographisches Bild erhält,
 - man eine Maske (24) auf das homographische Bild anwendet, um einen homographischen Bereich des homographischen Bildes zu erhalten,
 - man einen Mittelwert der Leuchtdichten des homographischen Bereichs entlang der Abszisse (U) des homographischen Bildes bildet, um eine Kurve der vertikalen homographischen Leuchtdichte ($L_{VH2}$) in Abhängigkeit jedes Ordinatenwertes (V) des homographischen Bereichs zu erhalten,
 - man eine Kurve der Differenz der vertikalen Leuchtdichten ($L_{V1}$ - $L_{VH2}$) aufzeichnet, die in jedem Ordinatenwert (V) dem Unterschied der Leuchtdichten zwischen den Kurven der Leuchtdichte des ersten Bildes ($L_{V1}$) und des homographischen Bildes ($L_{VH2}$) entspricht,
 - man den Ordinatenwert ($V_H$) für das erste Bild (20) liefert,
 - man den Ordinatenwert ($V_{I'}$) von wenigstens einem Wendepunkt (I') der Kurve der Differenz der vertikalen Leuchtdichten ($L_{V1}$ - $L_{VH2}$) bestimmt,
 - man den Ordinatenwert ($V_{I'}$) des Wendepunktes (I') mit dem Ordinatenwert des Horizonts ($V_H$) vergleicht,
 - man die Anwesenheit von Nebel (B) anzeigt, wenn der Ordinatenwert ($V_{I'}$) des Wendepunkts (I') unter dem Ordinatenwert des Horizonts ($V_H$) liegt,
- man den Extinktionskoeffizienten (k) ausgehend von dem Ordinatenwert des Wendepunktes ($V_{I'}$) und dem Ordinatenwert des Horizonts ($V_H$) berechnet, und
- man die Sichtweite (D) ausgehend von dem Extinktionskoeffizienten (k) berechnet.

**4.** Verfahren nach einem der vorhergehenden Ansprüche, **dadurch gekennzeichnet, dass** man außerdem eine geometrische Kalibrierung ($\lambda_V$) der Bilderfassung durchführt.

**5.** Verfahren nach dem vorhergehenden Anspruch, **dadurch gekennzeichnet, dass** die geometrische Kalibrierung ($\lambda_v$) durch Vergleich der Koordinaten von zwei auf dem ersten Bild (20) bekannten Punkten mit den Koordinaten der beiden Punkte in der Szene (21) erfolgt.

**6.** Verfahren nach einem der vorhergehenden Ansprüche, **dadurch gekennzeichnet, dass** die Sichtweite (D) regelmäßig von wenigstens einem im Wesentlichen kontinuierlich aufgenommenen Bild (L1 ; L2) berechnet wird.

**7.** Verfahren zur Sichtweitenbestimmung nach einem der vorhergehenden Ansprüche, **dadurch gekennzeichnet, dass** man eine Kurve der theoretischen vertikalen Leuchtdichte ($L_{Vt}$) konstruiert, und dass man den Extinktionskoeffizienten (k) des Nebels durch Minimierung des Abstand der Leuchtdichte (E) in jedem Ordinatenwert (V) zwischen den Kurven der vertikalen Leuchtdichte ($L_V$) und der theoretischen Leuchtdichte (Lvt) bestimmt, dann die Sichtweite (D) ausgehend von dem erhaltenen Extinktionskoeffizienten (k) berechnet.

**8.** Verfahren zur Sichtweitenbestimmung nach einem der vorhergehenden Ansprüche,
**dadurch gekennzeichnet, dass**

- man ein zweites Bild (20') in derselben Richtung (F) und demselben Sinn wie das erste Bild (20) aufnimmt,
- man die Leuchtdichte ($L_2$) in jedem Punkt des zweiten Bilds (20') erfasst,
- man eine Homographie (H) des zweiten Bildes (20') so durchführt, dass letzteres in ein Koordinatensystem (C, x, y, z) des ersten Bildes (20) zurückgeführt wird und man ein homographisches Bild erhält,
- man eine Maske (24) auf das homographische Bild anwendet, um einen homographischen Bereich zu erhalten,
- man einen Mittelwert der Leuchtdichte entlang der Abszisse (U) des homographischen Bildes bildet, um eine Kurve der homographischen Leuchtdichte ($L_{VH2}$) in Abhängigkeit jedes Ordinatenwertes (V) des homographischen Bereichs zu erhalten,
- man eine Kurve der Differenz zwischen den beiden Kurven der vertikalen Leuchtdichten ($L_{V1} - L_{VH2}$) aufzeichnet, die in jedem Ordinatenwert des Bereichs dem Unterschied der Leuchtdichten zwischen den Kurven der Leuchtdichte des Bereichs ($L_{V1}$) und dem homographischen Bereich ($L_{VH2}$) entspricht,
- man eine Kurve der theoretischen Leuchtdichte (Lvt) konstruiert,
- man den Extinktionskoeffizienten (k) des Nebels durch Minimierung des Abstands (E) zwischen der Kurve der Differenzen der Leuchtdichten ($L_{V1} - L_{VH2}$) des ersten Bildes (20) und dem homographischen Bild und der Kurve der theoretischen Leuchtdichte (Lvt) bestimmt, dann die Sichtweite (D) ausgehend von dem erhaltenen Extinktionskoeffizienten (k) berechnet.

**9.** Verfahren zur Bestimmung der Anwesenheit von Nebel, insbesondere von einem Fahrzeug (12) aus in einer Szene (21), **dadurch gekennzeichnet, dass**:

- man wenigstens ein erstes Bild (20) der Szene (21) vom Fahrzeug aus, vorzugsweise in einer Richtung (F) entlang der Fortbewegungsrichtung des Fahrzeugs (12), aufnimmt,
- man den Ordinatenwert des Horizonts ($V_H$) für das erste Bild (20) liefert,
- man eine Maske (24) auf das erste Bild (20) anwendet, um einen Bereich (22) des ersten Bildes (20) zu erhalten,
- man die Leuchtdichte (L) in jedem Punkt des ersten Bildes (20) erfasst, man einen Mittelwert dieser Leuchtdichte entlang der Abszisse (U) des Bereichs (22) bildet, um eine Kurve der vertikalen Leuchtdichte ($L_v$) in Abhängigkeit jedes Ordinatenwertes (V) des Bereichs (22) zu erhalten, und die wenigstens einen Wendepunkt (I) aufweist,
- man den Ordinatenwert ($V_I$) von wenigstens einem Wendepunkt (I) der Kurve der vertikalen Leuchtdichte ($L_V$) bestimmt,
- man den Ordinatenwert ($V_I$) des Wendepunkts mit dem Ordinatenwert des Horizonts ($V_H$) vergleicht,
- man die Anwesenheit von Nebel (B) anzeigt, wenn der Ordinatenwert des Wendepunkts ($V_I$) unter dem Ordinatenwert des Horizonts ($V_H$) liegt.

FIG.1

FIG.2

FIG.3

FIG.7

## FIG.4

S1

L

S2

$V$

$Lv$

I

$U$

S3

k

$D = \dfrac{3}{k}$ ~S4

## FIG.5

S1

L

S2

$V$

$V_I$

$Lv$

I

$U$

$\max \dfrac{dLv}{dV}$

$V_I$

$V_H, \lambda v$

$V_I - V_H < 0$
?

B

S31

S3~ k

$D = \dfrac{3}{k}$ ~S4

FIG.6

FIG.8

FIG.9